# EUROPÄISCHE PATENTSCHRIFT

(11) **EP 3 173 305 B1**
(45) Veröffentlichungstag und Bekanntmachung des Hinweises auf die Patenterteilung: **23.10.2024**
(21) Anmeldenummer: 15196246.1
(22) Anmeldetag: 25.11.2015
(51) Int. Cl.: B60W 50/14

(54) **VERFAHREN ZUM BETREIBEN EINES KRAFTFAHRZEUGS MIT EINEM ELEKTRISCHEN FAHRZEUGANTRIEB UND EINEM VERBRENNUNGSMOTOR UND KRAFTFAHRZEUG**
METHOD FOR OPERATING A MOTOR VEHICLE HAVING AN ELECTRIC VEHICLE DRIVE AND A COMBUSTION ENGINE AND MOTOR VEHICLE
PROCEDE DE FONCTIONNEMENT D'UN VEHICULE AUTOMOBILE COMPRENANT UN ENTRAINEMENT DE VEHICULE ELECTRIQUE ET D'UN MOTEUR A COMBUSTION ET VEHICULE AUTOMOBILE

(43) Veröffentlichungstag der Anmeldung: 31.05.2017
(73) Patentinhaber: Volkswagen Aktiengesellschaft, 38440 Wolfsburg (DE)
(72) Erfinder: Bellin, Jan, 30627 Hannover (DE); Breuel, Matthias, 68163 Mannheim (DE)

(56) Entgegenhaltungen:
- DE-A1- 102013 219 441
- DE-A1- 102014 206 540
- US-A1- 2012 035 795

## Beschreibung

Die Erfindung betrifft ein Verfahren zum Betreiben eines Kraftfahrzeugs mit einem elektrischen Fahrzeugantrieb und einem Verbrennungsmotor. Sie betrifft ferner ein Kraftfahrzeug.

In einer wachsenden Zahl von Kraftfahrzeugen werden elektrische Motoren zum Antrieb genutzt, insbesondere um die Emission von Schadstoffen, wie sie bei herkömmlichen Verbrennungsmotoren entstehen, zu vermeiden. Es wird diskutiert, beispielsweise in Städten Elektrozonen einzurichten, in denen das Fahren nur mit einem emissionsarmen elektrischen Antrieb zugelassen ist.

Zudem kann der Wirkungsgrad elektrischer Motoren dem eines Verbrennungsmotors unter bestimmten Bedingungen überlegen sein, etwa bei eher niedrigen Geschwindigkeiten und häufigem Halten und Anfahren in einer urbanen Umgebung. Umgekehrt kann allerdings auch der Antrieb durch einen Verbrennungsmotor vorteilhaft sein, etwa wenn hohe Beschleunigungen und Reisegeschwindigkeiten erreicht werden sollen. Zudem wird die Energiedichte von herkömmlichen Treibstoffen in elektrischen Energiespeichern nicht erreicht, sodass typische Akkumulatoren in Kraftfahrzeugen eine geringere Reichweite als typische Treibstofftanks erlauben. Zudem nimmt das Aufladen eines Akkumulators längere Zeit in Anspruch als das Füllen eines Treibstofftanks mit herkömmlichem Treibstoff.

Um die Vorteile beider Antriebsformen nutzen zu können, werden sie in Hybridfahrzeugen kombiniert. Dies kann auf verschiedene Weise erfolgen, beispielsweise kann ein Akkumulator mit einer eher geringen Kapazität mittels der Bewegungsenergie des Fahrzeugs, etwa beim Bremsen, aufgeladen werden und diese Energie unter bestimmten Voraussetzungen wieder abgeben. Ferner weisen sogenannte Plug-in-Hybridfahrzeuge einen elektrischen Akkumulator mit relativ großer Kapazität auf, der durch Anschließen an eine externe elektrische Energiequelle, etwa eine Ladestation oder eine Ladesäule, aufgeladen werden kann. Dadurch wird, in etwa vergleichbar dem Betanken eines Treibstofftanks, dem Fahrzeug Energie zugeführt, die während der Fahrt etwa in Bewegungsenergie umgesetzt werden kann. Ferner kann der Akkumulator während der Fahrt mittels eines durch den Verbrennungsmotor angetriebenen Generators aufgeladen werden.

Der Betrieb von zumindest zwei verschiedenen Energiewandlern in einem Kraftfahrzeug, also etwa einem Elektromotor und einem Verbrennungsmotor, ist eine komplexe Aufgabe, da die optimale, effiziente Steuerung von einer Reihe verschiedener Parameter abhängt. Der Nutzer kann diese Einstellungen bei herkömmlichen Kraftfahrzeugen nur sehr grob vornehmen und die Auswirkungen der Einstellungen nur eingeschränkt überblicken.

So werden etwa bei dem in der DE 10 2012 001 74 A1 vorgeschlagenen Verfahren zur Steuerung eines Hybridantriebs vom Nutzer Angaben zur Entfernung einer Ladestation und der zu reservierenden elektrischen Reichweite erfasst. Ferner werden die Reichweite mit Verbrennungsmotor, die reservierte elektrische Reichweite und die darüber hinaus verfügbare Reichweite angezeigt.

Zudem sind Bedieneinrichtungen bekannt, bei denen der Nutzer etwa mittels eines Tastendrucks das Aufladen des Akkumulators mithilfe des Verbrennungsmotors startet. In diesem Fall wird das System typischerweise so betrieben, dass eine möglichst schnelle vollständige Aufladung des Akkumulators erreicht wird. Dies erfolgt allerdings nicht unbedingt unter optimalen Bedingungen. Zudem muss der Nutzer den Ladezustand des Akkumulators ständig selbst überwachen und das Laden manuell steuern, um den gewünschten Betrieb des Kraftfahrzeugs zu gewährleisten.

Die DE 10 2013 219441 A1 beschreibt ein Verfahren zur Ladeplanung eines Fahrzeugs mit elektrischem Antrieb. Es wird eine grafische Ausgabe beschrieben, bei der relativ zur Gesamtlänge einer Strecke bis zu einem Ziel die aktuelle Position des Fahrzeugs sowie die Positionen potentieller Ladesäulen markiert sind. Ferner werden Streckenabschnitte unterschiedlich dargestellt, je nachdem ob der Ladezustand der Batterie ausreicht, sie elektrisch zu befahren. An einer Ladesäule kann eingegeben werden, wie viel Zeit zum Laden zur Verfügung steht, und die Anzeige der elektrischen Befahrbarkeit wird entsprechend angepasst.

Die US 2012/0035795 A1 beschreibt eine Strategie für ein abstandsorientiertes Energiemanagement, bei dem basierend auf einer Route eine Entwicklung des Ladezustands einer Batterie geplant und das Fahrzeug anschließend anhand dieses Plans betrieben wird. Der Nutzer kann beispielsweise Abschnitte einer Route definieren und jeweils eine Betriebsweise vorgeben. Dabei schlägt das System alternative Möglichkeiten vor, um unmögliche Eingaben zu korrigieren, Energie ökonomischer zu nutzen und Emissionen zu reduzieren.

Die DE 10 2014 206 540 A1 beschreibt schließlich eine Vorrichtung und ein Verfahren zur Darstellung einer Betriebsstrategie eines Elektro- oder Hybridfahrzeuges. Die Vorrichtung umfasst eine Auswerteeinheit, die derart ausgebildet ist, dass sie in Abhängigkeit von Parametern einer festgelegten Fahrtstrecke eine Betriebsstrategie ermittelt, und eine Anzeigeeinheit, auf der die festgelegte Fahrtstrecke dargestellt ist.

Es ist daher die Aufgabe der Erfindung, ein Verfahren zum Betreiben eines Kraftfahrzeugs mit einem elektrischen Fahrzeugantrieb und einem Verbrennungsmotor sowie ein Kraftfahrzeug anzugeben, die eine vorausschauende, möglichst effiziente Planung des Betriebs ermöglichen und den Nutzer bei den entsprechenden Einstellungen unterstützen.

Diese Aufgabe wird erfindungsgemäß durch ein Verfahren mit den Merkmalen des Anspruchs 1 sowie ein Kraftfahrzeug mit den Merkmalen des Anspruchs 11 gelöst. Vorteilhafte Ausgestaltungen und Weiterbildungen ergeben sich aus den abhängigen Ansprüchen.

Bei dem erfindungsgemäßen Verfahren zum Betreiben eines Kraftfahrzeugs mit einem elektrischen Fahrzeugantrieb und einem Verbrennungsmotor umfasst das Kraftfahrzeug einen Akkumulator für den elektrischen Fahrzeugantrieb und einen Treibstoffspeicher für den Verbrennungsmotor. Das Kraftfahrzeug weist zumindest einen Betriebsparameter auf, wobei anhand einer Einstellung des Betriebsparameters der Antrieb des Kraftfahrzeugs mittels elektrischem Fahrzeugantrieb und/oder Verbrennungsmotor sowie ein Laden des Akkumulators mittels Verbrennungsmotor gesteuert wird. Dabei werden ein Ladezustand des Akkumulators und eine geplante Route erfasst. Ferner werden ein geplanter Energieinhalt des Akkumulators und eine geplante Einstellung des Betriebsparameters jeweils in Abhängigkeit von der geplanten Route bestimmt. Es werden Graphikdaten einer graphischen Darstellung erzeugt, wobei die graphische Darstellung zumindest ein Graphikelement umfasst, das den geplanten Energieinhalt des Akkumulators in Abhängigkeit von der geplanten Route anzeigt. Schließlich werden die Graphikdaten ausgegeben.

Es wird also anhand der geplanten Route geplant, wie das Kraftfahrzeug betrieben werden soll. Dies erlaubt vorteilhafterweise eine vorausschauende Optimierung, etwa mit Blick auf eine möglichst hohe Effizienz der Energieausnutzung. Die Nutzung der verschiedenen zur Verfügung stehenden Antriebsformen kann so gesteuert werden, dass diese auf der Route jeweils optimal eingesetzt werden. Die geplante Route kann dabei von verschiedenen Einrichtungen des Fahrzeugs oder von anderen Einrichtungen erfasst werden. Beispielsweise kann das Fahrzeug ein Navigationsgerät umfassen, das die geplante Route bestimmt, oder es kann eine Navigationsanwendung eines mobilen Nutzergeräts verwendet werden, von der Daten an das Fahrzeug übertragbar sind. Ferner kann die geplante Route etwa von einem externen Rechner erfasst werden, beispielsweise über eine Verbindung mit einem Rechnernetzwerk wie dem Internet. Die geplante Route kann ferner manuell eingegeben werden mittels an sich bekannter Verfahren.

Die über die geplante Route erfassten Daten können verschiedene Informationen umfassen, beispielsweise räumliche Abstände, die Typen der befahrenen Straßen und Wege, ein Höhenprofil der Strecke, Geschwindigkeitsbeschränkungen oder eine eingeschränkte Befahrbarkeit und weitere geographische und fahrtrelevante Eigenschaften.

Die Optimierung des Betriebs erfolgt durch optimales Bestimmen des Betriebsparameters, der insbesondere während der Fahrt nicht nur statisch ist, sondern dauernd angepasst werden kann. Durch den Betriebsparameter wird etwa gesteuert, in welchem Verhältnis die Aktivitäten des elektrischen Fahrzeugantriebs und des Verbrennungsmotors zueinander stehen sowie ob und wie ein Aufladen des Akkumulators durch den Verbrennungsmotor erfolgt. Dies beeinflusst zwangsläufig auch den Energieinhalt des Akkumulators. Unter dem Betriebsparameter ist also erfindungsgemäß nicht notwendigerweise ein Wert einer einzigen physikalischen Größe zu verstehen, sondern er kann eine Reihe von Einstellungen des Fahrzeugs umfassen, wobei die Einstellung des Betriebsparameters im Zusammenhang mit der Entwicklung des Energieinhalts des Akkumulators steht. Bei dem Verfahren wird nun bestimmt, wie der Betriebsparameter entlang der geplanten Route eingestellt werden soll.

Es können verschiedene Ziele bei der Optimierung des Betriebsparameters vorgegeben sein. Beispielsweise kann der Akkumulator bis zur Ankunft vollständig entladen werden, wenn dort ein erneutes Aufladen geplant ist. Auf diese Weise kann ein möglichst großer Anteil des elektrischen Betriebs erreicht werden. Ferner kann vorgesehen sein, dass auf bestimmten Abschnitten der Route vornehmlich mittels des elektrischen Fahrzeugantriebs gefahren werden soll, etwa in einem Stadtbereich. In diesem Fall muss der Energieinhalt des Akkumulators zu Beginn dieses Routenabschnitts ausreichend hoch sein, um eine elektrische Fahrt zu ermöglichen. Umgekehrt kann vorgesehen sein, dass auf bestimmten Routenabschnitten der Verbrennungsmotor verwendet werden soll, beispielsweise bei einer Autobahnfahrt, die eine höhere Geschwindigkeit wünschenswert macht. Ferner kann vorgesehen sein, dass der Akkumulator während des Befahrens eines bestimmten Streckenabschnitts mittels des Verbrennungsmotors aufgeladen wird, etwa um möglichst bald eine längere elektrisch fahrbare Reichweite zu haben.

Die Ausgabe der Einstellungen und der damit verbundenen Konsequenzen erfolgt erfindungsgemäß mittels einer graphischen Darstellung, die Informationen über den Energieinhalt des Akkumulators in Abhängigkeit von der geplanten Route darstellt. Beispielsweise kann in einem Graph der Energieinhalt des Akkumulators in Abhängigkeit von der zurückgelegten Strecke dargestellt werden. Insbesondere wird so ausgegeben, an welchem Ort mit welchem Ladezustand zu rechnen ist. Beispielsweise kann der Nutzer so erkennen, ob in einer Stadt auf der Route der Energieinhalt des Akkumulators zum elektrischen Betreiben des Fahrzeugs ausreicht, ob eine Aufladung während einer Autobahnfahrt geplant ist oder ob der Ladezustand gehalten und statt dessen Treibstoff verbraucht wird. Dies ermöglicht es dem Nutzer, gegebenenfalls Anpassungen vorzunehmen und deren Ergebnis im Voraus abzuschätzen.

Bei dem erfindungsgemäßen Verfahren wird ferner ein Effizienzwert in Abhängigkeit von der geplanten Route bestimmt und die graphische Darstellung umfasst eine Anzeige des Effizienzwerts in Abhängigkeit von der geplanten Route. Dadurch kann der Nutzer vorteilhafterweise erkennen, wie effizient der geplante Betrieb des Kraftfahrzeugs ist.

Erfindungsgemäß umfasst die graphische Darstellung Bereiche des Energieinhalts, die als mehr oder weniger effizient gekennzeichnet sind, indem ein effizienter Bereich und ein ineffizienter Bereich dargestellt werden. Weiter erfindungsgemäß wird zur Bestimmung des Effizienzwertes quantifiziert, wie effizient die Energie des Fahrzeugs genutzt wird, wenn bei der geplanten Einstellung des Betriebsparameters an einer Position der Route ein bestimmter Energieinhalt erreicht wird.

Der "Effizienzwert" ist dabei erfindungsgemäß nicht notwendigerweise als physikalische Größe zu verstehen. Vielmehr kann er anhand verschiedener Größen, welche die Effizienz des Betriebs charakterisieren, so bestimmt werden, dass der Nutzer den Effizienzwert leicht erfassen und interpretieren kann. Insbesondere wird der Treibstoffverbrauch bewertet, sodass auch die Reichweite des Fahrzeugs mit einem bestimmten Treibstoffvorrat und Energieinhalt berücksichtigt wird. Ferner kann berücksichtigt werden, ob der elektrische Fahrzeugantrieb und der Verbrennungsmotor jeweils effizient betrieben werden. Beispielsweise können bestimmte Drehzahlen als mehr oder weniger effizient bewertet werden. Der Effizienzwert hat insbesondere eine Bedeutung als Maß für die ökologische Verträglichkeit des Fahrzeugbetriebs, insbesondere unter dem Gesichtspunkt der möglichst guten Ausnutzung der zur Verfügung stehenden Energie und der Vermeidung von Emissionen, etwa Schadstoffe, Abgase und/oder Lärm. Dem Nutzer kann auf diese Weise die ökologische Verträglichkeit des Betriebs des Kraftfahrzeugs angezeigt werden und es können ihm Möglichkeiten zur Verbesserung nahegelegt werden.

Bei einer weiteren Ausbildung umfasst die graphische Darstellung eine Farbskala und der Effizienzwert wird anhand der Farbskala angezeigt. Der Nutzer kann den Effizienzwert so vorteilhafterweise schnell erfassen und interpretieren.

Die farbige Darstellung des Effizienzwertes kann beispielsweise als Hintergrund eines Graphen des Energieinhalts in Abhängigkeit von der zurückgelegten Strecke angezeigt werden. Verläuft der Graph innerhalb eines als besonders günstig gekennzeichneten Bereichs, so erhält der Nutzer die Rückmeldung, dass die geplanten Einstellungen des Betriebsparameters vorteilhaft sind. Umgekehrt signalisiert ein Verlauf in einem als weniger günstig gekennzeichneten Bereich, dass ein Optimierungspotential besteht.

Bei einer Weiterbildung werden solche Werte des Energieinhalts des Akkumulators bestimmt, die in Abhängigkeit von der geplanten Route nicht anhand des einstellbaren Betriebsparameters erreicht werden können. Die bestimmten Werte des Energieinhalts werden in der graphischen Darstellung angezeigt.

Der Nutzer kann so vorteilhafterweise erkennen, ob die von ihm gewünschten Werte des Energieinhalts erreicht werde können oder nicht. Wünscht der Nutzer beispielsweise einen bestimmten Energieinhalt des Akkumulators an einem bestimmten Punkt der geplanten Route, so kann in der Anzeige dargestellt werden, ob dies durch geeignete Einstellungen des Betriebsparameters, etwa durch Aufladen während der Fahrt zu diesem Punkt, erreichbar ist. Beispielsweise können in einer graphischen Darstellung des Energieinhalts in Abhängigkeit von der geplanten Route solche Bereiche schraffiert, farblich markiert und/oder anderweitig markiert werden.

Insbesondere kann dies mit einer farblichen Darstellung des Effizienzwertes verknüpft werden: Während die Farbskala verschiedene Farbwerte zur Darstellung des Effizienzwertes definiert, kann eine weitere Farbe für nicht erreichbare Werte bestimmt sein, da für solche Werte kein Effizienzwert definiert sein kann.

Bei einer Ausbildung wird die geplante Einstellung des geplanten Betriebsparameters in Abhängigkeit von der geplanten Route in der graphischen Darstellung angezeigt. Der Nutzer kann dadurch vorteilhafterweise leicht erfassen, an welchem Ort welche Einstellung des Betriebsparameters vorgesehen ist. Beispielsweise können zwei als "EV"- und "Hybrid"-Modus bezeichnete Betriebsarten definiert sein und in der graphischen Darstellung können die Bereiche dieser Modi markiert werden, etwa farbig, durch Schriftelemente oder weitere graphische Kennzeichnungen.

Bei einer weiteren Ausbildung wird durch eine Nutzereingabe ein Soll-Ladezustand des Akkumulators für einen bestimmten Ort der geplanten Route erfasst und der geplante Betriebsparameter wird so bestimmt, dass der Soll-Ladezustand des Akkumulators an dem bestimmten Ort erreicht wird.

Der Nutzer kann dadurch vorteilhafterweise die Entwicklung des Energieinhalts sowie das Laden oder Entladen des Akkumulators manuell beeinflussen und damit den Betrieb des Kraftfahrzeugs an seinen Bedarf anpassen. Beispielsweise kann der Nutzer bestimmen, dass der Akkumulator an einem bestimmten Punkt der geplanten Route vollständig oder zu einem bestimmten Teil geladen sein soll, etwa um im nachfolgenden Bereich elektrisch fahren zu können.

Die Erfassung der Nutzereingabe kann durch verschiedene, an sich bekannte Verfahren erfolgen. Beispielsweise kann die graphische Darstellung mittels eines Touchscreens wiedergegeben werden, der eine berührungsempfindliche Oberfläche umfasst, durch die Nutzereingaben erfasst werden können. Insbesondere kann dabei die Nutzereingabe einer bestimmten Position der graphischen Darstellung zugeordnet werden und es kann etwa ein Graph, der den geplanten Verlauf des Energieinhalts des Akkumulators in Abhängigkeit von der geplanten Route darstellt, direkt durch eine Berührung an einer bestimmten Position verändert werden, wobei auch entsprechend der geplante Betriebsparameter angepasst wird.

Bei einer Weiterbildung weist die graphische Darstellung ferner zumindest eine auswählbare Schaltfläche auf. Es wird eine Auswahl der Schaltfläche erfasst und anhand der ausgewählten Schaltfläche wird eine Einstellung des Betriebsparameters bestimmt. Dadurch wird vorteilhafterweise die Bedienung vereinfacht.

Unter einer "Schaltfläche" wird im Sinne der Erfindung ein Steuerelement einer graphischen Benutzerschnittstelle verstanden. Eine Schaltfläche unterscheidet sich von Elementen und Flächen zur reinen Informationsanzeige, sogenannten Anzeigeelementen bzw. Anzeigenflächen, darin, dass sie auswählbar ist. Bei einer Auswahl einer Schaltfläche wird eine zugeordnete Funktion ausgeführt. Die Funktion kann etwa zu einer Veränderung der Informationsanzeige führen. Ferner können über die Schaltfläche Einrichtungen gesteuert werden, deren Bedienung von der Informationsanzeige unterstützt wird, insbesondere durch die Einstellung des Betriebsparameters. Die Schaltfläche kann somit einen herkömmlichen mechanischen Schalter ersetzen. Sie kann beliebig für eine frei programmierbare Anzeigefläche erzeugt und von dieser angezeigt werden.

Beispielsweise kann die Schaltfläche ein Schaltsymbol oder anderes graphisches Element umfassen, das in der graphischen Darstellung angezeigt wird. Durch die Auswahl der Schaltfläche kann insbesondere eine oder mehrere Nutzereingaben in einfacher Weise vorgenommen werden.

Bei einer Ausgestaltung der Erfindung ist der Schaltfläche ein Soll-Ladezustand des Akkumulators für einen bestimmten Ort der geplanten Route zugeordnet und nach dem Erfassen der Auswahl der Schaltfläche wird die geplante Einstellung des Betriebsparameters so bestimmt, dass der Soll-Ladezustand des Akkumulators an dem bestimmten Ort erreicht wird.

Der Nutzer kann dadurch vorteilhafterweise schnell die gewünschte Einstellung erreichen. Beispielsweise kann für eine bestimmte Stelle entlang der geplanten Route eine Schaltfläche angezeigt werden, durch deren Auswahl an dieser Stelle ein vollständig geladener oder entladener Zustand des Akkumulators erzielt wird. Beispielsweise kann dadurch vorgegeben werden, dass am Ende der geplanten Route der Akkumulator entleert sein soll, wobei die Verteilung der elektrischen Energie auf die Fahrt zu diesem Punkt automatisch verteilt werden kann. Ferner kann eine Schaltfläche vorsehen, dass der Energieinhalt des Akkumulators bis zum Erreichen des Ziels der Route gehalten werden soll, sodass in erster Linie der Verbrennungsmotor für die Fahrt genutzt werden soll.

Bei einer Weiterbildung umfasst die graphische Darstellung zumindest ein Graphiksymbol und anhand des Graphiksymbols wird die Position einer Einrichtung zum Laden des Akkumulators und/oder zum Auffüllen des Treibstoffspeichers in Abhängigkeit von der geplanten Route angezeigt. Der Nutzer kann so vorteilhafterweise auf Möglichkeiten hingewiesen werden, im Verlauf der geplanten Route elektrische Energie und/oder Treibstoff aufzufüllen.

Insbesondere kann der Nutzer auf diese Weise auf Möglichkeiten hingewiesen werden, durch Aufladen des Akkumulators mittels einer Ladesäule eine höhere elektrisch fahrbare Reichweite zu erzielen. Es kann auf diese Weise insbesondere vermieden werden, den Akkumulator durch den Verbrennungsmotor zu laden. Es wird dabei also Treibstoff gespart.

Die Aufladung des Akkumulators kann dabei an die Gegebenheiten und die Notwendigkeiten der geplanten Route angepasst werden: Steht beispielsweise eine längere Stadtfahrt bevor, so kann ein Laden der Batterie auf der Route bis dorthin vorgesehen sein. Besteht die Möglichkeit, statt des Verbrennungsmotors eine Ladesäule zur Aufladung zu nutzen, so kann der Nutzer darauf hingewiesen werden und der Verbrauch von Treibstoff zum Aufladen des Akkumulators kann vermindert werden.

Bei einer Ausgestaltung umfasst die graphische Darstellung eine Anzeige der geplanten Route mit geographischen Bezeichnungen und/oder Abstandsangaben. Dadurch werden vorteilhafterweise Orientierungspunkte für den Nutzer angegeben. Beispielsweise können Ortsnamen angegeben werden oder es kann der Abstand zwischen verschiedenen Position entlang der Route angegeben werden.

Bei einer Ausbildung wird die geplante Einstellung des Betriebsparameters anhand der geographischen Eigenschaften der geplanten Route bestimmt. Der Betrieb des Kraftfahrzeugs kann dadurch vorteilhafterweise an die Umgebung angepasst werden.

Beispielsweise kann beim Fahren in einer städtischen Umgebung der elektrische Fahrzeugantrieb bevorzugt werden, da hier geringere Geschwindigkeiten sowie häufigeres Bremsen und Anfahren zu erwarten sind. Dagegen kann etwa auf einer Autobahn der Verbrennungsmotor genutzt werden, wenn dieser hier effizienter betrieben werden kann. Ferner kann das Laden des Akkumulators durch den Verbrennungsmotor an die geographischen Eigenschaften eines Routenabschnitts angepasst werden, wenn etwa auf einer längeren Bergabfahrt Energie wiedergewonnen werden kann.

Das erfindungsgemäße Kraftfahrzeug umfasst einen elektrischen Fahrzeugantrieb und einen Verbrennungsmotor sowie einen Akkumulator für den elektrischen Fahrzeugantrieb und einen Treibstoffspeicher für den Verbrennungsmotor. Dabei weist das Kraftfahrzeug zumindest einen einstellbaren Betriebsparameter auf, durch den der Antrieb des Kraftfahrzeugs mittels elektrischem Fahrzeugantrieb und/oder Verbrennungsmotor sowie ein Laden des Akkumulators mittels Verbrennungsmotor steuerbar ist. Durch eine Erfassungseinheit sind ein Ladezustand des Akkumulators und eine geplante Route erfassbar. Ferner sind durch ein Steuergerät ein geplanter Energieinhalt des Akkumulators und eine geplante Einstellung des Betriebsparameters jeweils in Abhängigkeit von der geplanten Route bestimmbar. Es ist zudem durch eine Graphikeinheit eine graphische Darstellung erzeugbar, wobei die graphische Darstellung zumindest ein Graphikelement umfasst, das den geplanten Energieinhalt des Akkumulators in Abhängigkeit von der geplanten Route anzeigt. Schließlich sind die Graphikdaten durch eine Ausgabeeinheit ausgebbar.

Das erfindungsgemäße Kraftfahrzeug ist insbesondere ausgebildet, das vorstehend beschriebene erfindungsgemäße Verfahren zu implementieren. Das Kraftfahrzeug weist somit dieselben Vorteile auf wie das erfindungsgemäße Verfahren.

Bei dem erfindungsgemäßen Kraftfahrzeug ist durch das Steuergerät ferner ein Effizienzwert in Abhängigkeit von der geplanten Route bestimmbar und die graphische Darstellung umfasst eine Anzeige des Effizienzwerts in Abhängigkeit von der geplanten Route. Dadurch kann dem Nutzer vorteilhafterweise ausgegeben werden, wie effizient die geplanten Einstellungen des Betriebsparameters sind.

Bei einer weiteren Ausbildung ist ferner anhand einer Eingabeeinheit eine Nutzereingabe erfassbar und die geplante Einstellung des Betriebsparameters wird anhand der Nutzereingabe bestimmt. Der Nutzer kann so vorteilhafterweise die Planung der Einstellung des Betriebsparameters beeinflussen und anpassen.

Die Erfindung wird nun anhand von Ausführungsbeispielen mit Bezug zu den Zeichnungen erläutert.

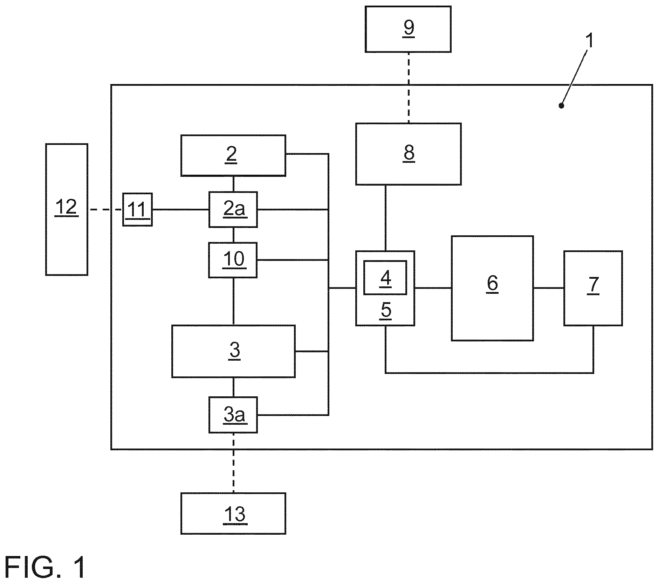

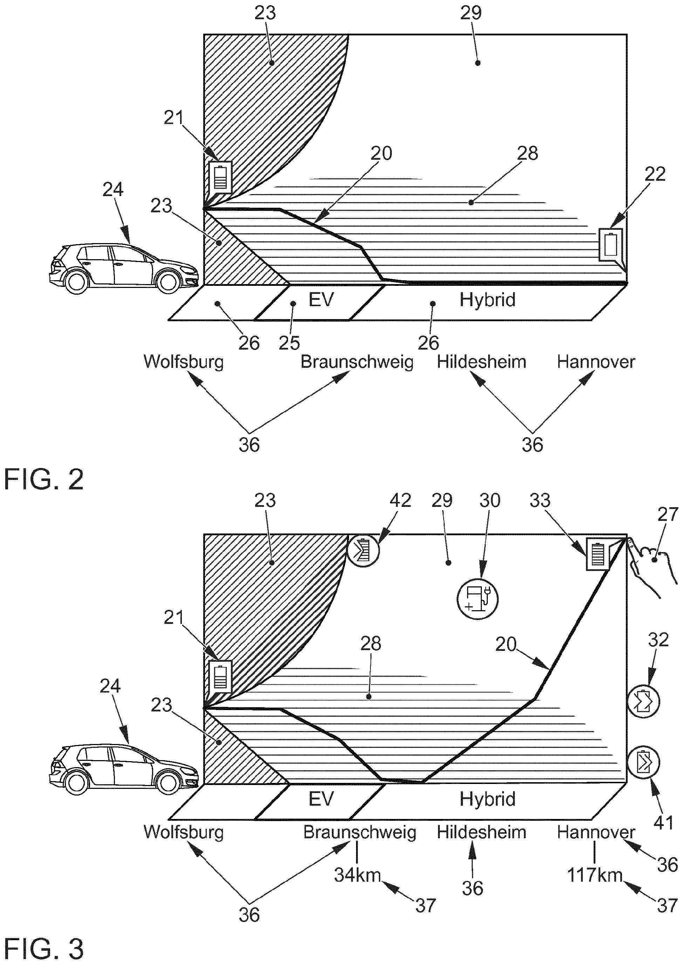

Figur 1 zeigt ein Ausführungsbeispiel des erfindungsgemäßen Kraftfahrzeugs und Figuren 2 bis 9 zeigen erfindungsgemäß erzeugte Anzeigen.

Mit Bezug zu Figur 1 wird ein Ausführungsbeispiel des erfindungsgemäßen Kraftfahrzeugs erläutert.

Ein Kraftfahrzeug 1 umfasst einen elektrischen Fahrzeugantrieb 2 und einen Verbrennungsmotor 3. Es umfasst ferner einen Akkumulator 2a zum Speichern elektrischer Energie für den elektrischen Fahrzeugantrieb 2 sowie einen Treibstoffspeicher 3a, der einen Treibstoffvorrat für den Verbrennungsmotor 3 aufnehmen kann. Der Verbrennungsmotor 3 ist ferner mit einem Generator 10 gekoppelt, sodass durch den Verbrennungsmotor 3 elektrischer Strom erzeugt werden kann, um den mit dem Generator 10 gekoppelten Akkumulator 2a aufzuladen. Zur Aufladung des Akkumulators 2a mittels externer Energiequellen ist eine Auflade-Schnittstelle 11 vorgesehen, die bei dem dargestellten Beispiel lösbar mit einer Ladesäule 12 außerhalb des Kraftfahrzeugs 1 gekoppelt ist. Zudem kann der Treibstoffspeicher 3a lösbar mit einer Tankstelle 13 verbunden werden, um Treibstoff aufzufüllen.

Zur Steuerung der Antriebsmotoren 2, 3 und des Generators 10 sowie zur Erfassung des Energieinhalts des Akkumulators 2a und des Treibstoffinhalts des Treibstoffspeichers 3a sind diese Komponenten des Kraftfahrzeugs 1 mit einem Steuergerät 5 verbunden, welches eine Erfassungseinheit 4 umfasst. Das Steuergerät 5 ist ferner datentechnisch mit einem Navigationsgerät 8 und einer Graphikeinheit 6 gekoppelt. Die Graphikeinheit 6 wiederum ist mit einer Ausgabeeinheit 7 gekoppelt, im dargestellten Fall ist dies ein Touchscreen 7. Durch den Touchscreen 7 sind Nutzereingaben erfassbar, die über eine datentechnische Koppelung an das Steuergerät 5 übertragen werden können. In dem dargestellten Ausführungsbeispiel ist das Navigationsgerät 8 mit einem externen Server 9 verbunden, insbesondere mittels einer datentechnischen Verbindung über ein Mobilfunknetz.

Bei weiteren Ausführungsbeispielen sind verschiedene Hybrid-Konfigurationen vorgesehen. Beispielweise können Verbrennungsmotor und elektrischer Fahrzeugantrieb das Fahrzeug antreiben. Alternativ kann der Verbrennungsmotor lediglich den Generator antreiben, der dann wiederum elektrischen Strom für den elektrischen Fahrzeugantrieb bereitstellt. Die Erfindung ist insbesondere auf keine spezifische Konfiguration beschränkt.

Mit Bezug zu den Figuren 1 und 2 wird ein Ausführungsbeispiel des erfindungsgemäßen Verfahrens erläutert.

Durch die Erfassungseinheit 4 des Kraftfahrzeugs 1 wird der Energieinhalt des Akkumulators 2a erfasst. Ferner erzeugt das Navigationsgerät 8 eine Route, im dargestellten Fall von Wolfsburg bis Hannover über Braunschweig und Hildesheim. Die geplante Route wird an das Steuergerät 5 übertragen, angereichert durch geographische Daten, die von dem externen Server 9 erfasst werden. Insbesondere umfassen die von dem Navigationsgerät 8 übertragenen Daten Informationen zu räumlichen Abständen und zu dem Höhenverlauf der geplanten Route. Es werden ferner Informationen dazu übertragen, wann die Route über eine Autobahn oder durch ein Stadtgebiet führt.

Das Steuergerät 5 erzeugt basierend auf den erfassten Daten einen geplanten Verlauf für einen Betriebsparameter. Dieser Betriebsparameter steuert, ob das Kraftfahrzeug 1 durch den elektrischen Fahrzeugantrieb 2, den Verbrennungsmotor 3 oder durch eine Kombination der beiden angetrieben wird. Er steuert ferner, ob der Verbrennungsmotor 3 mit Hilfe des Generators 10 elektrische Energie erzeugt zum Aufladen des Akkumulators 2a. Die Planung der Einstellung des Betriebsparameters wird bei der Erzeugung durch das Steuergerät 5 auf möglichst effiziente Nutzung der dem Fahrzeug zur Verfügung stehenden Energie hin optimiert, sodass die Reichweite des Kraftfahrzeugs 1 maximiert wird.

Die Entwicklung des Betriebsparameters kann insbesondere anhand der Entwicklung des Energieinhalts des Akkumulators 2a dargestellt werden: Wird das Kraftfahrzeug 1 lediglich durch den Verbrennungsmotor 3 angetrieben, so bleibt der Energieinhalt des Akkumulators 2a im Wesentlichen konstant. Wird dagegen der elektrische Fahrzeugantrieb 2 genutzt, so nimmt der Energieinhalt ab. Wird der Akkumulator 2a mithilfe des Verbrennungsmotors 3 aufgeladen, so nimmt der Energieinhalt zu.

Auf Basis der geplanten Einstellungen des Betriebsparameters in Abhängigkeit von der geplanten Route erzeugt die Graphikeinheit 6 Graphikdaten, die an den Touchscreen 7 übertragen und dort angezeigt werden. Zentrales Element der graphischen Darstellung ist ein Graph 20, durch den die Entwicklung des Energieinhalts des Akkumulators 2a entlang der geplanten Route dargestellt wird. Bei dem dargestellten Ausführungsbeispiel wird der Energieinhalt in einem orthogonalen Koordinatensystem durch den Graph 20 dargestellt, wobei entlang der vertikalen Achse (Ordinate) der Energieinhalt und entlang der horizontalen Achse (Abszisse) die zurückgelegte Entfernung dargestellt wird.

Am Ausgangspunkt wird der aktuelle Energieinhalt von 30% durch ein Symbol 21 dargestellt. Am Ende der Strecke beträgt der Energieinhalt in diesem Beispiel 0%, was mithilfe eines weiteren Symbols 22 dargestellt wird. Entlang der horizontalen Achse sind Abschnitte markiert, die den verschiedenen Betriebsmodi des Kraftfahrzeugs 1 entsprechen, insbesondere Abschnitte für den Hybridfahrmodus 26 und den Elektrofahrmodus 25. Die verschiedenen dargestellten Fahrmodi 25, 26 können mittels einer Beschriftung, einer unterschiedlichen graphischen Hervorhebung und/oder durch verschiedene Farben und andere Gestaltungsmerkmale hervorgehoben und unterschieden werden. Der Nutzer erhält dadurch eine grobe Orientierung darüber, in welchen Streckenbereichen das Fahrzeug 1 in welchem Modus betrieben wird.

Die graphische Darstellung umfasst ferner Bereiche des Energieinhalts, die mit dem Kraftfahrzeug 1 nicht erreichbar sind. Diese Energieinhalte 23 sind beispielsweise deshalb nicht erreichbar, weil ein schnelleres Entladen des Akkumulators 2a oder ein schnelleres Aufladen nicht möglich sind. Die unerreichbaren Energieinhalte 23 sind in der Darstellung hervorgehoben, beispielsweise durch eine graue Hinterlegung, eine bestimmte Schraffur oder andere graphische Hervorhebungen. In Figur 2 und den folgenden Figuren ist dies mittels einer Schraffur angedeutet.

Die graphische Darstellung umfasst ferner Bereiche des Energieinhalts, die als mehr oder weniger effizient gekennzeichnet sind. Im dargestellten Fall ist dies ein effizienter Bereich 28 und ein ineffizienter Bereich 29. Die Hervorhebung kann mittels verschiedener graphischer Mittel erfolgen, beispielsweise durch eine Schraffur, eine bestimmte Einfärbung oder die Helligkeit der jeweiligen Bereiche. Ferner kann durch das Steuergerät 5 ein Effizienzwert auch kontinuierlich bestimmt werden, sodass nicht nur zwei Effizienzbereiche 28, 29, sondern ein kontinuierlicher Übergang dargestellt werden kann. Dies kann etwa mittels einer Farbskala dargestellt werden. Die in Figur 2 dargestellte Anzeige von zwei Stufen deutet eine solche Farbskala an.

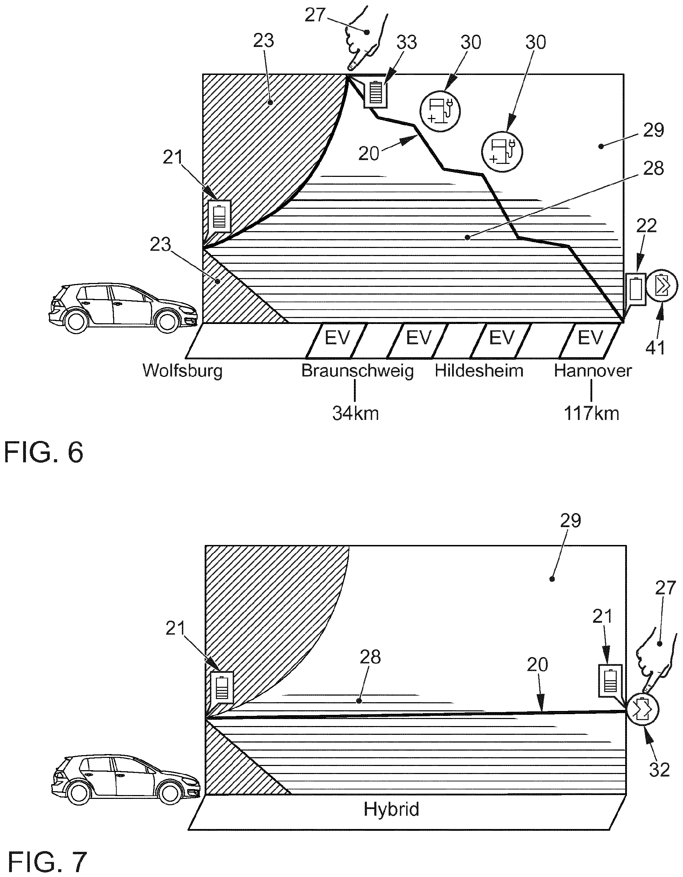

Zur Bestimmung des Effizienzwertes wird quantifiziert, wie effizient die Energie des Fahrzeugs 1 genutzt wird, wenn der Betriebsparameter so bestimmt wird, dass an dem jeweiligen Punkt der Darstellung an dieser Position der Route der bestimmte Energieinhalt erreicht wird. Beispielsweise ist aus Figur 2 ersichtlich, dass ein sofortiges Vollladen des Akkumulators 2a während der Fahrt ineffizient wäre, da der Graph 20 den ineffizienten Bereich 29 erreichen würde. Ein solcher Fall ist beispielhaft in Figur 6 dargestellt.

Bei der in Figur 2 dargestellten Planung soll der Betriebsparameter so eingestellt werden, dass die Fahrt im Hybridmodus begonnen wird, wobei der Energieinhalt des Akkumulators 2a im Wesentlichen konstant bleibt, anschließend folgt eine Fahrt im Elektrofahrmodus, wobei der Energieinhalt auf ein sehr niedriges Niveau abfällt, und anschließend wird mit leerem Akkumulator 2a weitergefahren.

Zudem wird ein Fahrzeugsymbol 24 dargestellt, das die Symbolik der zu fahrenden Route entlang der horizontalen Achse der Darstellung verdeutlicht. Das Fahrzeugsymbol 24 kann sich während des Abfahrens der geplanten Route entlang der horizontalen Achse bewegen, um dem Nutzer anzuzeigen, wieviel Strecke er bereits zurückgelegt hat.

Mit Bezug zu Figur 3 wird eine weitere erfindungsgemäß erzeugte Anzeige erläutert.

Im Vergleich zu Figur 2 wurde die in Figur 3 dargestellte Anzeige auf die gleiche Weise, insbesondere durch das in Figur 1 dargestellte Kraftfahrzeug 1, erzeugt. Im Unterschied dazu sind nun allerdings mehrere Schaltflächen in der graphischen Darstellung dargestellt: Ein Symbol für den Charge-Modus 42 ermöglicht ein sofortiges, möglichst schnelles Aufladen des Akkumulators 2a. Ein Ladesäulensymbol 30 ist an einer Position dargestellt, die der Entfernung entlang der geplanten Route zu einer Ladesäule sowie dem dort vorgeschlagenen zu erreichenden Ladezustand entspricht. Ferner ist ein Symbol für den Hold-Modus 32 dargestellt, welches im dargestellten Fall auf gleicher Höhe wie der am Ausgangspunkt erfasste Energieinhalt von 30% 21 dargestellt wird. Auf Höhe der Grundlinie am Ende der dargestellten Entfernung ist ferner ein Symbol für den automatischen Hybrid-Modus 41 dargestellt.

In dem dargestellten Fall tippt ein Nutzer mit seiner Hand 27 auf die rechte obere Ecke des Diagramms. Er nimmt damit eine Nutzereingabe vor, durch die erfasst wird, dass der Energieinhalt am Ende der geplanten Route 100% betragen soll. Das entsprechende Symbol 33 für den Energieinhalt wird dort dargestellt, der Betriebsparameter wird so angepasst, dass eine Aufladung bis zum Ende der geplanten Route erfolgt, und der dem Energieinhalt entsprechende Graph 20 wird entsprechend dem geplanten Verlauf des Betriebsparameters angepasst. Es ist geplant, das Fahrzeug zunächst im Hybridmodus zu betreiben, wobei der Energieinhalt des Akkumulators 2a am Beginn der geplanten Route im Wesentlichen konstant bleibt. Anschließend soll im Elektrofahrmodus gefahren werden und der geplante Energieinhalt sinkt entsprechend ab. Während des anschließenden Fahrens im Hybridfahrmodus wird der Akkumulator 2a wieder aufgeladen, sodass der Energieinhalt ansteigt und zum Ende der geplanten Route bei 100% endet.

Die in Figur 3 dargestellte Darstellung umfasst ferner Angaben zu räumlichen Entfernungen 37, die dem Nutzer eine räumliche Orientierung ermöglichen.

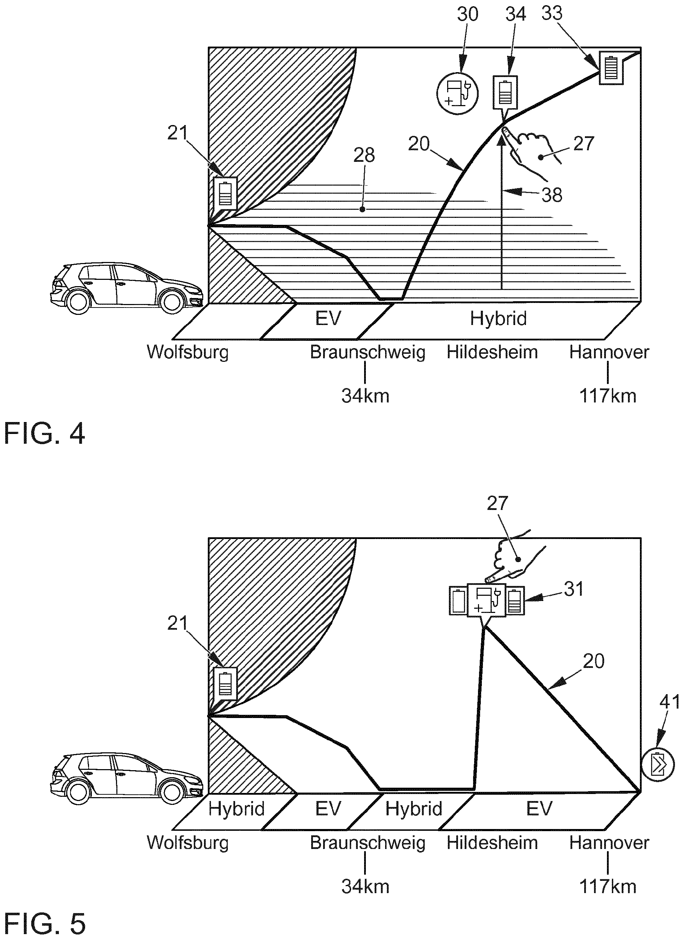

Mit Bezug zu Figur 4 wird eine weitere erfindungsgemäß erzeugte Anzeige erläutert.

Die hier dargestellte Anzeige kann beispielsweise ausgehend von der in Figur 3 dargestellten Anzeige erzeugt werden. Der Nutzer führt dazu mit der Hand 27 eine Wischbewegung vom unteren Bereich des Diagramms nach oben hin entlang eines hier zur Verdeutlichung dargestellten Pfeils 38 aus. Alternativ oder zusätzlich kann vorgesehen sein, die Nutzereingabe durch eine Tipp-Geste vorzunehmen. Ferner können verschiedene, an sich Bekannte Verfahren zur Erfassung der Nutzereingabe verwendet werden. Die Wischgeste endet bei einem Energieinhalt von 80%, wobei der Graph 20 so angepasst wird, dass er durch den Endpunkt der Wischgeste verläuft, und es wird ein Symbol 34 für einen Energieinhalt von 80% an der entsprechenden Stelle dargestellt.

Mit Bezug zu Figur 5 wird eine weitere erfindungsgemäß erzeugte Anzeige erläutert.

Es wird hier davon ausgegangen, dass der Nutzer bei einer Anzeige ähnlich der in Figur 3 dargestellten das dort angezeigte Ladesäulensymbol 30 ausgewählt hat. Es wird nun an der entsprechenden Stelle der geplanten Route ein Aufladen des Akkumulators 2a mittels einer Ladesäule 12 eingeplant. Dies wird dargestellt durch ein Aufladesymbol 31, wobei angezeigt wird, dass der Energieinhalt des Akkumulators 2a von 0% auf 80% geladen wird. Ferner wird davon ausgegangen, dass der Nutzer das Symbol 41 für den automatischen Hybrid-Modus ausgewählt hat, sodass nach dem Aufladen des Akkumulators 2a eine Fahrt im Elektrofahrmodus erfolgt und der Akkumulator bis zum Ende der geplanten Route entladen wird. Der Graph 20 verläuft also an der Position der Ladesäule bis zu einem Energieinhalt von 80% und fällt dann kontinuierlich bis zum Ende der geplanten Route auf 0% ab.

Mit Bezug zu Figur 6 wird eine weitere erfindungsgemäß erzeugte Anzeige erläutert.

Die hier dargestellte Anzeige kann beispielsweise erzeugt werden, nachdem der Nutzer mit seiner Hand 27 das in Figur 3 dargestellte Symbol 42 für den Charge-Modus ausgewählt hat und ferner mittels des Symbols 41 für den automatischen Hybrid-Modus eingestellt wurde, dass der Energieinhalt des Akkumulators 2a am Ende der Fahrstrecke geleert sein soll. Diese Eingaben des Nutzers führen dazu, dass der Akkumulator nach Beginn der Fahrt möglichst schnell geladen wird. Dies wird in der Anzeige dargestellt, indem der Graph 20 zunächst steil nach oben verläuft, entlang der Grenze des Bereichs des nicht erreichbaren Energieinhalts 23. Das Erreichen eines Energieinhalts von 100% wird durch ein Symbol 33 dargestellt.

Anschließend ist eine Fahrt geplant, bei der abwechselnd der elektrische Fahrzeugantrieb 2 und der Verbrennungsmotor 3 aktiv sind. Der geplante Energieinhalt des Akkumulators 2a fällt daher abwechselnd ab und bleibt dann wiederum annähernd konstant. Der Graph 20 befindet sich über weite Abschnitte der Route im ineffizienten Bereich 29. Die Anzeige umfasst ferner Ladesäulensymbole 30, die dem Nutzer anzeigen, dass an diesen Stellen der geplanten Route ein Aufladen des Energieinhalts des Akkumulators 2a erfolgen könnte. Insbesondere erfolgt diese Anzeige so, dass dem Nutzer unter ökologischen Gesichtspunkten vorteilhafte Alternativen nahegelegt werden. Zum Ende der Route ist ein Energieinhalt von 0% erreicht, was durch ein Symbol 22 dargestellt wird.

Mit Bezug zu Figur 7 wird eine weitere erfindungsgemäß erzeugte Anzeige erläutert.

Zur Erzeugung der in Figur 3 dargestellten Anzeige wurde durch die Hand des Nutzers 27das in Figur 3 dargestellte Symbol 32 für den Hold-Modus ausgewählt. Der Betriebsparameter wird daraufhin so eingestellt, dass über die gesamte geplante Route hinweg der Energieinhalt konstant bleibt, was durch einen konstanten Verlauf des Graphs 20 dargestellt wird. Sowohl am Anfang als auch am Ende der geplanten Route wird durch das Symbol 21 für einen Ladezustand von 30% der Energieinhalt des Akkumulators 2a dargestellt.

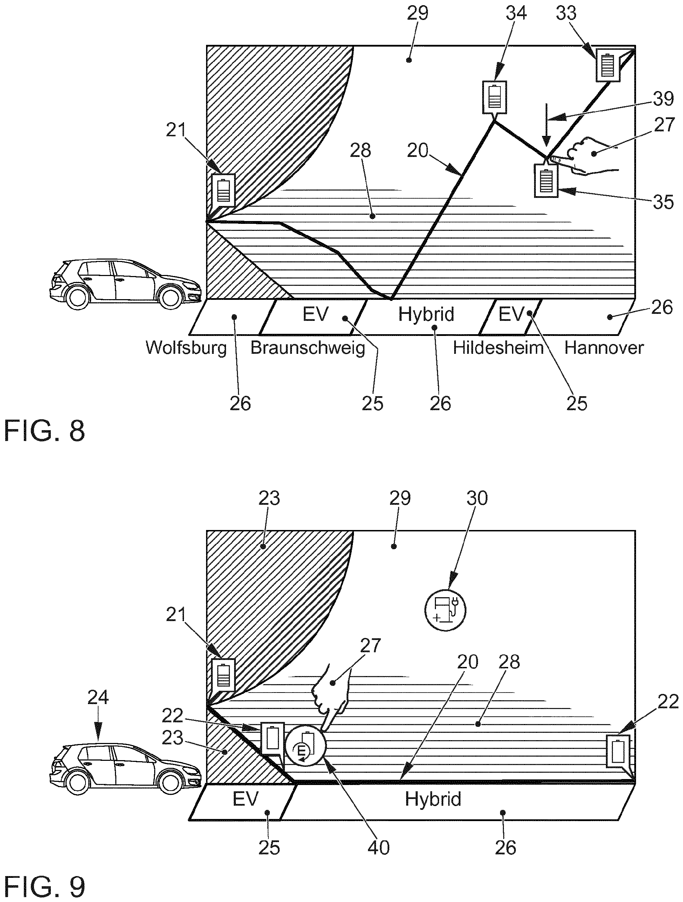

Mit Bezug zu Figur 8 wird eine weitere erfindungsgemäß erzeugte Anzeige erläutert.

Ausgehend beispielsweise von der in Figur 4 dargestellten Anzeige nimmt der Nutzer mit seiner Hand 27 eine Wischbewegung entlang eines hier zur Verdeutlichung dargestellten Pfeils 39 nach unten hin vor. Der Graph 20 wird dabei entsprechend so verschoben, dass er durch den Endpunkt der Wischgeste verläuft. Dies entspricht in dem dargestellten Beispiel einem Energieinhalt des Akkumulators 2 von 50%, was durch ein entsprechendes Symbol 35 dargestellt wird. Zum Absenken des Energieinhalts fährt das Fahrzeug 1 im Elektrofahrmodus EV, was durch die entsprechende Markierungsfläche 25 entlang der horizontalen Achse der Darstellung angezeigt wird. In dem dargestellten Fall wird die Fahrt des Fahrzeugs 1 in Hildesheim im Elektrofahrmodus durchgeführt. In einem weiteren Ausführungsbeispiel kann anhand der Daten des Navigationsgeräts 8 durch das Steuergerät 5 bestimmt werden, dass in Hildesheim durch ein Stadtgebiet gefahren wird und dass dementsprechend der Betrieb des Fahrzeugs im Elektrofahrmodus vorteilhaft ist. In diesem Fall kann automatisch bestimmt werden, dass das Fahrzeug hier im Elektrofahrmodus betrieben werden soll und entsprechend der geplante Energieinhalt des Akkumulators 2a absinken soll.

Mit Bezug zu Figur 9 wird eine weitere erfindungsgemäß erzeugte Anzeige erläutert.

In dem dargestellten Fall wählt der Nutzer mit seiner Hand 27 ein Schaltsymbol 40 für die Elektrofahrt aus. In diesem Fall wird das Kraftfahrzeug 1 ab Beginn der Fahrt im Elektrofahrmodus betrieben, sodass der Akkumulator 2a schnell entladen wird. Dies zeigt sich auch darin, dass der Graph 20 zu Beginn der geplanten Route dem Rand des Bereichs 23 des nicht erreichbaren Energieinhalts folgt. Wo der Graph 20 einen Energieinhalt von 0% erreicht, so wird dies durch ein Symbol 22 für den entsprechenden Energieinhalt dargestellt. Da kein weiteres Aufladen, etwa an der mittels des Ladesäulensymbols 30 dargestellten Möglichkeit zum Aufladen mittels einer externen Energiequelle vorgenommen wird, so verläuft der Graph 20 des Energieinhalts weiter konstant bei 0% bis zum Ende der geplanten Route.

### Bezugszeichenliste

- 1: Kraftfahrzeug
- 2: Elektrischer Fahrzeugantrieb
- 2a: Akkumulator
- 3: Verbrennungsmotor
- 3a: Treibstoffspeicher
- 4: Erfassungseinheit
- 5: Steuergerät
- 6: Graphikeinheit
- 7: Kombinierte Ausgabe- und Eingabeeinheit; Touchscreen
- 8: Navigationsgerät
- 9: Externer Server
- 10: Generator
- 11: Auflade-Schnittstelle
- 12: Ladesäule
- 13: Tankstelle
- 20: Graph (Energieinhalts vs. Route)
- 21: Energieinhalt 30%
- 22: Energieinhalt 0%
- 23: Unerreichbarer Energieinhalt
- 24: Fahrzeugsymbol
- 25: Elektrofahrmodus
- 26: Hybridfahrmodus
- 27: Hand des Nutzers
- 28: Effizienter Bereich
- 29: ineffizienter Bereich
- 30: Ladesäulensymbol
- 31: Aufladen des Energiespeichers (Symbol)
- 32: Hold-Modus (Symbol)
- 33: Energieinhalt 100%
- 34: Energieinhalt 80%
- 35: Energieinhalt 50%
- 36: Ortsnamen
- 37: Entfernungen
- 38: Wischgeste aufwärts
- 39: Wischgeste abwärts
- 40: Elektrofahrt
- 41: Automatischer Hybrid-Modus (Symbol)
- 42: Charge-Modus (Symbol)

## Patentansprüche

1. Verfahren zum Betreiben eines Kraftfahrzeugs (1) mit einem elektrischen Fahrzeugantrieb (2) und einem Verbrennungsmotor (3), wobei
das Kraftfahrzeug (1) einen Akkumulator (2a) für den elektrischen Fahrzeugantrieb (2) und einen Treibstoffspeicher (3a) für den Verbrennungsmotor (3) umfasst und
das Kraftfahrzeug (1) zumindest einen Betriebsparameter aufweist, wobei anhand einer Einstellung des Betriebsparameters der Antrieb des Kraftfahrzeugs (1) mittels elektrischem Fahrzeugantrieb (2) und/oder Verbrennungsmotor (3) sowie ein Laden des Akkumulators (2a) mittels Verbrennungsmotor (3) gesteuert wird;
bei dem
ein Ladezustand des Akkumulators (2a) und eine geplante Route erfasst werden; ein geplanter Energieinhalt des Akkumulators (2a) und eine geplante Einstellung des Betriebsparameters jeweils in Abhängigkeit von der geplanten Route bestimmt werden; Graphikdaten einer graphischen Darstellung erzeugt werden, wobei die graphische Darstellung zumindest ein Graphikelement (20) umfasst, das den geplanten Energieinhalt des Akkumulators (2a) in Abhängigkeit von der geplanten Route anzeigt, wobei das Graphikelement (20) die Entwicklung des Energieinhalts des Akkumulators (2a) entlang der geplanten Route darstellt; und
die Graphikdaten ausgegeben werden,
**dadurch gekennzeichnet, dass**
ferner ein Effizienzwert in Abhängigkeit von der geplanten Route bestimmt wird und die graphische Darstellung eine Anzeige des Effizienzwerts in Abhängigkeit von der geplanten Route umfasst, wobei die graphische Darstellung Bereiche des Energieinhalts umfasst, die als mehr oder weniger effizient gekennzeichnet sind, indem ein effizienter Bereich (28) und ein ineffizienter Bereich (29) dargestellt werden, und
zur Bestimmung des Effizienzwertes quantifiziert wird, wie effizient die Energie des Fahrzeugs (1) genutzt wird, wenn bei der geplanten Einstellung des Betriebsparameters an einer Position der Route ein bestimmter Energieinhalt erreicht wird.

2. Verfahren nach Anspruch 1,
**dadurch gekennzeichnet, dass**
die graphische Darstellung eine Farbskala umfasst und der Effizienzwert anhand der Farbskala angezeigt wird.

3. Verfahren nach einem der vorhergehenden Ansprüche,
**dadurch gekennzeichnet, dass**
solche Werte des Energieinhalts des Akkumulators (2a) bestimmt werden, die in Abhängigkeit von der geplanten Route nicht anhand des einstellbaren Betriebsparameters erreicht werden können, und
die bestimmten Werte des Energieinhalts in der graphischen Darstellung angezeigt werden.

4. Verfahren nach einem der vorhergehenden Ansprüche,
**dadurch gekennzeichnet, dass**
die geplante Einstellung des geplanten Betriebsparameters in Abhängigkeit von der geplanten Route in der graphischen Darstellung angezeigt wird.

5. Verfahren nach einem der vorhergehenden Ansprüche,
**dadurch gekennzeichnet, dass**
durch eine Nutzereingabe ein Soll-Ladezustand des Akkumulators (2a) für einen bestimmten Ort der geplanten Route erfasst wird und
der geplante Betriebsparameter so bestimmt wird, dass der Soll-Ladezustand des Akkumulators (2a) an dem bestimmten Ort erreicht wird.

6. Verfahren nach einem der vorhergehenden Ansprüche,
**dadurch gekennzeichnet, dass**
die graphische Darstellung ferner zumindest eine auswählbare Schaltfläche (32, 40, 41, 42) aufweist,
eine Auswahl der Schaltfläche (32, 40, 41, 42) erfasst wird und
anhand der ausgewählten Schaltfläche (32, 40, 41, 42) eine Einstellung des Betriebsparameters bestimmt wird.

7. Verfahren nach Anspruch 6,
**dadurch gekennzeichnet, dass**
der Schaltfläche (32, 40, 41, 42) ein Soll-Ladezustand des Akkumulators (2a) für einen bestimmten Ort der geplanten Route zugeordnet ist und nach dem Erfassen der Auswahl der Schaltfläche (32, 40, 41, 42) die geplante Einstellung des Betriebsparameters so bestimmt wird, dass der Soll-Ladezustand des Akkumulators (2a) an dem bestimmten Ort erreicht wird.

8. Verfahren nach einem der vorhergehenden Ansprüche,
**dadurch gekennzeichnet, dass**
die graphische Darstellung zumindest ein Graphiksymbol (30) umfasst und anhand des Graphiksymbols (30) die Position einer Einrichtung zum Laden des Akkumulators (2a) und/oder zum Auffüllen des Treibstoffspeichers (3a) in Abhängigkeit von der geplanten Route angezeigt wird.

9. Verfahren nach einem der vorhergehenden Ansprüche,
**dadurch gekennzeichnet, dass**
die graphische Darstellung eine Anzeige der geplanten Route mit geographischen Bezeichnungen (36) und/oder Abstandsangaben (37) umfasst.

10. Verfahren nach einem der vorhergehenden Ansprüche,
**dadurch gekennzeichnet, dass**
die geplante Einstellung des Betriebsparameters anhand der geographischen Eigenschaften der geplanten Route bestimmt wird.

11. Kraftfahrzeug (1) mit
einem elektrischen Fahrzeugantrieb (2) und einem Verbrennungsmotor (3) sowie einem Akkumulator (2a) für den elektrischen Fahrzeugantrieb (2) und einem Treibstoffspeicher (3a) für den Verbrennungsmotor (3), wobei das Kraftfahrzeug (1) zumindest einen einstellbaren Betriebsparameter aufweist, durch den der Antrieb des Kraftfahrzeugs (1) mittels elektrischem Fahrzeugantrieb (2) und/oder Verbrennungsmotor (3) sowie ein Laden des Akkumulators (2a) mittels Verbrennungsmotor (3) steuerbar ist;
einer Erfassungseinheit (4), durch die ein Ladezustand des Akkumulators (2a) und eine geplante Route erfassbar sind;
einem Steuergerät (5), durch das ein geplanter Energieinhalt des Akkumulators (2a) und eine geplante Einstellung des Betriebsparameters jeweils in Abhängigkeit von der geplanten Route bestimmbar sind;
einer Graphikeinheit (6), durch die eine graphische Darstellung erzeugbar ist, wobei die graphische Darstellung zumindest ein Graphikelement (20) umfasst, das den geplanten Energieinhalt des Akkumulators (2a) in Abhängigkeit von der geplanten Route anzeigt, wobei das Graphikelement (20) die Entwicklung des Energieinhalts des Akkumulators (2a) entlang der geplanten Route darstellt; und
einer Ausgabeeinheit (7), durch welche die Graphikdaten ausgebbar sind,
**dadurch gekennzeichnet, dass**
durch das Steuergerät (5) ferner ein Effizienzwert in Abhängigkeit von der geplanten Route bestimmt wird und die graphische Darstellung eine Anzeige des Effizienzwerts in Abhängigkeit von der geplanten Route umfasst, wobei die graphische Darstellung Bereiche des Energieinhalts umfasst, die als mehr oder weniger effizient gekennzeichnet sind, indem ein effizienter Bereich (28) und ein ineffizienter Bereich (29) dargestellt werden, und
zur Bestimmung des Effizienzwertes quantifiziert wird, wie effizient die Energie des Fahrzeugs (1) genutzt wird, wenn bei der geplanten Einstellung des Betriebsparameters an einer Position der Route ein bestimmter Energieinhalt erreicht wird.

12. Kraftfahrzeug nach Anspruch 11,
**dadurch gekennzeichnet, dass**
ferner anhand einer Eingabeeinheit (7) eine Nutzereingabe erfassbar ist und die geplante Einstellung des Betriebsparameters anhand der Nutzereingabe bestimmt wird.

## Claims

1. Method for operating a motor vehicle (1) comprising an electric vehicle drive (2) and an internal combustion engine (3),
the motor vehicle (1) comprising an accumulator (2a) for the electric vehicle drive (2) and a fuel storage tank (3a) for the internal combustion engine (3) and
the motor vehicle (1) having at least one operating parameter, and, based on an adjustment of the operating parameter, the drive of the motor vehicle (1) being controlled by means of the electric vehicle drive (2) and/or the internal combustion engine (3) and charging of the accumulator (2a) being controlled by means of the internal combustion engine (3);
in which a charge state of the accumulator (2a) and a planned route are recorded;
a planned energy content of the accumulator (2a) and a planned adjustment of the operating parameter are each determined depending on the planned route; graphic data of a graphical representation are generated, the graphical representation comprising at least one graphic element (20) which displays the planned energy content of the accumulator (2a) depending on the planned route, the graphic element (20) representing the development of the energy content of the accumulator (2a) along the planned route; and
the graphic data is output,
**characterized in that**
furthermore, an efficiency value is determined depending on the planned route and the graphical representation comprises a display of the efficiency value depending on the planned route, the graphical representation comprising regions of the energy content which are characterized as more or less efficient by representing an efficient region (28) and an inefficient region (29), and
to determine the efficiency value, it is quantified how efficiently the energy of the vehicle (1) is used when, in the case of the planned adjustment of the operating parameter, a specific energy content is achieved at a position on the route.

2. Method according to claim 1,
**characterized in that**
the graphical representation includes a color scale and the efficiency value is displayed using the color scale.

3. Method according to either of the preceding claims,
**characterized in that**
such values of the energy content of the accumulator (2a) are determined which, depending on the planned route, can be achieved without using the adjustable operating parameter, and
the specific values of the energy content are displayed in the graphical representation.

4. Method according to any of the preceding claims,
**characterized in that**
the planned adjustment of the planned operating parameter is displayed in the graphical representation depending on the planned route.

5. Method according to any of the preceding claims,
**characterized in that**
a target charge state of the accumulator (2a) is recorded for a specific location on the planned route by a user input and
the planned operating parameter is determined such that the target charge state of the accumulator (2a) is achieved at the specific location.

6. Method according to any of the preceding claims,
**characterized in that**
the graphical representation further comprises at least one selectable button (32, 40, 41, 42),
a selection of the button (32, 40, 41, 42) is recorded and
an adjustment of the operating parameter is determined using the selected button (32, 40, 41, 42).

7. Method according to claim 6,
**characterized in that**
the button (32, 40, 41,42) is assigned a target charge state of the accumulator (2a) for a specific location on the planned route and after the selection of the button (32, 40, 41, 42) has been recorded, the planned adjustment of the operating parameter is determined such that the target charge state of the accumulator (2a) is achieved at the specific location.

8. Method according to any of the preceding claims,
**characterized in that**
the graphical representation comprises at least one graphic symbol (30) and the graphic symbol (30) is used to display the position of a device for charging the accumulator (2a) and/or for filling the fuel storage tank (3a) depending on the planned route.

9. Method according to any of the preceding claims,
**characterized in that**
the graphical representation comprises a display of the planned route with geographical designations (36) and/or distance information (37).

10. Method according to any of the preceding claims,
**characterized in that**
the planned adjustment of the operating parameter is determined based on the geographical characteristics of the planned route.

11. Motor vehicle (1) comprising
an electric vehicle drive (2) and an internal combustion engine (3) as well as an accumulator (2a) for the electric vehicle drive (2) and a fuel storage tank (3a) for the internal combustion engine (3), the motor vehicle (1) having at least one adjustable operating parameter by means of which the drive of the motor vehicle (1) can be controlled by means of the electric vehicle drive (2) and/or the internal combustion engine (3) and charging of the accumulator (2a) can be controlled by means of the internal combustion engine (3);
a recording unit (4) by means of which a charge state of the accumulator (2a) and a planned route can be recorded;
a control device (5) by means of which a planned energy content of the accumulator (2a) and a planned adjustment of the operating parameter can each be determined depending on the planned route;
a graphic unit (6) by means of which a graphical representation can be generated, the graphical representation comprising at least one graphic element (20) which displays the planned energy content of the accumulator (2a) depending on the planned route, the graphic element (20) representing the development of the energy content of the accumulator (2a) along the planned route; and
an output unit (7) by means of which the graphic data can be output,
**characterized in that**
the control device (5) further determines an efficiency value depending on the planned route and the graphical representation comprises a display of the efficiency value depending on the planned route, the graphical representation comprising regions of the energy content which are characterized as more or less efficient by displaying an efficient region (28) and an inefficient region (29), and
to determine the efficiency value, it is quantified how efficiently the energy of the vehicle (1) is used when, in the case of the planned adjustment of the operating parameter, a specific energy content is achieved at a position on the route.

12. Motor vehicle according to claim 11,
**characterized in that**
furthermore, a user input can be recorded using an input unit (7) and the planned adjustment of the operating parameter is determined based on the user input.

## Revendications

1. Procédé permettant de faire fonctionner un véhicule automobile (1) comportant un entraînement de véhicule électrique (2) et un moteur thermique (3), dans lequel
le véhicule automobile (1) comprend un accumulateur (2a) pour l'entraînement de véhicule électrique (2) et un réservoir de carburant (3a) pour le moteur thermique (3) et
le véhicule automobile (1) présente au moins un paramètre de fonctionnement, dans lequel, à l'aide d'un réglage du paramètre de fonctionnement, l'entraînement du véhicule automobile (1) est commandé au moyen de l'entraînement de véhicule électrique (2) et/ou du moteur thermique (3) ainsi qu'une charge de l'accumulateur (2a) est commandée au moyen du moteur thermique (3) ;
dans lequel un état de charge de l'accumulateur (2a) et un itinéraire prévu sont saisis ;
un contenu énergétique prévu de l'accumulateur (2a) et un réglage prévu du paramètre de fonctionnement sont respectivement déterminés en fonction de l'itinéraire prévu ; des données graphiques d'une représentation graphique sont générées, dans lequel la représentation graphique comprend au moins un élément graphique (20) qui indique le contenu énergétique prévu de l'accumulateur (2a) en fonction de l'itinéraire prévu, dans lequel l'élément graphique (20) représente l'évolution du contenu énergétique de l'accumulateur (2a) le long de l'itinéraire prévu ; et
les données graphiques sont émises,
**caractérisé en ce que**
en outre, une valeur d'efficacité est déterminée en fonction de l'itinéraire prévu et la représentation graphique comprend une indication de la valeur d'efficacité en fonction de l'itinéraire prévu, dans lequel la représentation graphique comprend des zones du contenu énergétique qui sont caractérisées comme étant plus ou moins efficaces en représentant une zone efficace (28) et une zone inefficace (29), et
pour la détermination de la valeur d'efficacité, on quantifie à quel point l'énergie du véhicule automobile (1) est utilisée de manière efficace lorsque, lors du réglage prévu du paramètre de fonctionnement, un contenu énergétique déterminé est atteint à une position de l'itinéraire.

2. Procédé selon la revendication 1,
**caractérisé en ce que**
la représentation graphique comprend une échelle de couleurs et la valeur d'efficacité est indiquée à l'aide de l'échelle de couleurs.

3. Procédé selon l'une des revendications précédentes,
**caractérisé en ce que**
lesdites valeurs du contenu énergétique de l'accumulateur (2a) sont déterminées, lesquelles peuvent être atteintes sans l'aide du paramètre de fonctionnement réglable en fonction de l'itinéraire prévu, et
les valeurs déterminées du contenu énergétique sont indiquées dans la représentation graphique.

4. Procédé selon l'une des revendications précédentes,
**caractérisé en ce que**
le réglage prévu du paramètre de fonctionnement prévu est indiqué dans la représentation graphique en fonction de l'itinéraire prévu.

5. Procédé selon l'une des revendications précédentes,
**caractérisé en ce que**
un état de charge de consigne de l'accumulateur (2a) est saisi par une entrée utilisateur pour un lieu déterminé de l'itinéraire prévu et
le paramètre de fonctionnement prévu est déterminé de sorte que l'état de charge de consigne de l'accumulateur (2a) est atteint au lieu déterminé.

6. Procédé selon l'une des revendications précédentes,
**caractérisé en ce que**
la représentation graphique présente en outre au moins un bouton (32, 40, 41, 42) sélectionnable,
une sélection du bouton (32, 40, 41, 42) est saisie et
un réglage du paramètre de fonctionnement est déterminé à l'aide du bouton (32, 40, 41, 42) sélectionné.

7. Procédé selon la revendication 6,
**caractérisé en ce que**
un état de charge de consigne de l'accumulateur (2a) est associé au bouton (32, 40, 41, 42) pour un lieu déterminé de l'itinéraire prévu et, après la saisie de la sélection du bouton (32, 40, 41, 42), le réglage prévu du paramètre de fonctionnement est déterminé de sorte que l'état de charge de consigne de l'accumulateur (2a) est atteint au lieu déterminé.

8. Procédé selon l'une des revendications précédentes,
**caractérisé en ce que**
la représentation graphique comprend au moins un symbole graphique (30) et, à l'aide du symbole graphique (30), la position d'un dispositif pour le chargement de l'accumulateur (2a) et/ou pour le remplissage du réservoir de carburant (3a) est indiquée en fonction de l'itinéraire prévu.

9. Procédé selon l'une des revendications précédentes,
**caractérisé en ce que**
la représentation graphique comprend une indication de l'itinéraire prévu comportant des désignations géographiques (36) et/ou des informations de distance (37).

10. Procédé selon l'une des revendications précédentes,
**caractérisé en ce que**
le réglage prévu du paramètre de fonctionnement est déterminé en fonction des propriétés géographiques de l'itinéraire prévu.

11. Véhicule automobile (1) comportant
un entraînement de véhicule électrique (2) et un moteur thermique (3) ainsi qu'un accumulateur (2a) pour l'entraînement de véhicule électrique (2) et un réservoir de carburant (3a) pour le moteur thermique (3), dans lequel le véhicule automobile (1) présente au moins un paramètre de fonctionnement réglable, par lequel l'entraînement du véhicule automobile (1) peut être commandé au moyen de l'entraînement de véhicule électrique (2) et/ou du moteur thermique (3) ainsi qu'une charge de l'accumulateur (2a) peut être commandée au moyen du moteur thermique (3) ;
une unité de saisie (4), par laquelle un état de charge de l'accumulateur (2a) et un itinéraire prévu peuvent être saisis ;
un appareil de commande (5), par lequel un contenu énergétique prévu de l'accumulateur (2a) et un réglage prévu du paramètre de fonctionnement peuvent être respectivement déterminés en fonction de l'itinéraire prévu ;
une unité graphique (6), par laquelle une représentation graphique peut être générée, dans lequel la représentation graphique comprend au moins un élément graphique (20) qui indique le contenu énergétique prévu de l'accumulateur (2a) en fonction de l'itinéraire prévu, dans lequel l'élément graphique (20) représente l'évolution du contenu énergétique de l'accumulateur (2a) le long de l'itinéraire prévu ; et
une unité d'émission (7), par laquelle les données graphiques peuvent être émises,
**caractérisé en ce que**
l'appareil de commande (5) détermine en outre une valeur d'efficacité en fonction de l'itinéraire prévu et la représentation graphique comprend une indication de la valeur d'efficacité en fonction de l'itinéraire prévu, dans lequel la représentation graphique comprend des zones du contenu énergétique qui sont caractérisées comme étant plus ou moins efficaces en représentant une zone efficace (28) et une zone inefficace (29), et
pour la détermination de la valeur d'efficacité, on quantifie à quel point l'énergie du véhicule automobile (1) est utilisée de manière efficace lorsque, lors du réglage prévu du paramètre de fonctionnement, un contenu énergétique déterminé est atteint à une position de l'itinéraire.

12. Véhicule automobile selon la revendication 11,
**caractérisé en ce que**
en outre, une entrée utilisateur peut être saisie à l'aide d'une unité d'entrée (7) et le réglage prévu du paramètre de fonctionnement est déterminé à l'aide de l'entrée utilisateur.
